# EUROPEAN PATENT APPLICATION

(11) **EP 3 434 591 A1**
(43) Date of publication of application: **30.01.2019**
(21) Application number: 17769634.1
(22) Date of filing: 25.01.2017
(51) Int. Cl.: B64C 29/00, B64C 13/16, B64C 27/08

(54) **VERTICAL TAKEOFF AND LANDING AIRCRAFT**

(30) Priority: 22.03.2016 JP 2016057690
(71) Applicant: IHI Corporation, Tokyo 135-8710 (JP)
(72) Inventor: TUNEKAWA Masayoshi, Tokyo 135-8710 (JP); TAMURA Tetsuya, Tokyo 135-8710 (JP); HASEGAWA Masao, Tokyo 135-8710 (JP)
(74) Representative: O'Connor, Dominic David
(86) International application number: PCT/JP2017/002503
(87) International publication number: WO 2017/163587

(57) **Abstract**

A vertical take-off and landing aircraft 1 according to an embodiment of the present disclosure includes: a pair of ducted fans 2; a fuselage 3 that is disposed at a lower position than the ducted fans 2; a frame body 4 that connects the fuselage 3 and the ducted fans 2; and a stabilizer fin 5 that is disposed at a position at which the stabilizer fin 5 does not obstruct airflows from the ducted fans 2, which is a position that is lower than an airframe center of gravity G and which is rearward of the fuselage 3.

## Description

### Technical Field

Embodiments disclosed herein relate to a vertical take-off and landing aircraft, and more particularly to a vertical take-off and landing aircraft that has a plurality of ducted fans.

### Background Art

A vertical take-off and landing aircraft, which is a flight vehicle that is capable of takeoff and landing in a vertical direction with respect to the ground, does not require a runway and therefore has an advantage of being able to take off and land in narrow places and in rough terrain. On the other hand, a problem with vertical take-off and landing aircrafts is that they are susceptible to an influence of a wind.

For example, in a vertical take-off and landing aircraft described in Patent Document 1, a vertical stabilizer fin and a horizontal stabilizer fin are disposed rearward of a cabin. Further, in a vertical take-off and landing aircraft described in Patent Document 2, passive fins that swing upon receiving a cross wind are disposed in four directions at a bottom of an airframe.

### Related Art Document

### Patent Document

Patent Document 1: Japanese Patent Laid-Open No. 2002-370696
Patent Document 2: Japanese Patent Laid-Open No. 2012-228944

### Summary of the Invention

### Problems to be solved by the Invention

In a vertical take-off and landing aircraft that has a plurality of ducted fans, there is a problem that because a surface area of ducts that cover the outer circumference of the fans is large, the vertical take-off and landing aircraft is susceptible to wind resistance and it is difficult to maintain an attitude of an airframe.

Further, according to the vertical take-off and landing aircraft described in Patent Document 1, because a stabilizer fin is disposed below a propeller that generates thrust, there is a problem that the stabilizer fin obstructs an airflow that is generated by the propeller.

Furthermore, according to the vertical take-off and landing aircraft described in Patent Document 2, because the passive fins swing in accordance with a strength of the cross wind, there is a problem that it is difficult to maintain an attitude of the airframe.

The present disclosure has been created in view of the aforementioned problems, and an object of the present disclosure is to provide a vertical take-off and landing aircraft that can easily maintain an attitude of an airframe even when having ducted fans that are susceptible to an influence of a wind.

### Means for solving the Problems

According to the present disclosure there is provided a vertical take-off and landing aircraft that includes: a plurality of ducted fans; a fuselage that is disposed at a lower position than the ducted fans; a frame body that connects the fuselage and the ducted fans; and a stabilizer fin that is disposed at a position at which the stabilizer fin does not obstruct airflows from the ducted fans, that is a position which is lower than an airframe center of gravity and is rearward of the fuselage.

The stabilizer fin may have a portion that projects further downward than the fuselage.

In a state in which the vertical take-off and landing aircraft has landed on the ground horizontally, the stabilizer fin may be disposed in an inclined state such that a trailing edge of the stabilizer fin is positioned further downward than a leading edge of the stabilizer fin.

The fuselage may include a leg portion that supports the airframe when landing, and the stabilizer fin may be connected to the leg portion.

The fuselage may include a leg portion that supports the airframe when landing, and the leg portion may include a roll stabilizer fin that suppresses a rolling motion of the airframe.

The vertical take-off and landing aircraft may include a second stabilizer fin that is disposed at a position at which the second stabilizer fin does not obstruct airflows from the ducted fans, that is a position which is lower than the airframe center of gravity and is frontward of the fuselage.

### Advantageous Effects of the Invention

According to the vertical take-off and landing aircraft of the present disclosure that is described above, by arranging the stabilizer fin at the position at which the stabilizer fin does not obstruct airflows from the ducted fans which is a position that is lower than the airframe center of gravity and is rearward of the fuselage, even in a case where ducts of the ducted fans receive wind resistance, torque generated by drag can be cancelled out and the attitude of the airframe can be easily maintained.

### Brief Description of the Drawings

FIG. 1A is a plan view of a vertical take-off and landing aircraft according to a first embodiment of the present disclosure.
FIG. 1B is a front view of the vertical take-off and landing aircraft according to the first embodiment of the present disclosure.
FIG. 2A is a side view of the vertical take-off and landing aircraft according to the first embodiment of the present disclosure.
FIG. 2B is a side view of a vertical take-off and landing aircraft according to a modification of the first embodiment of the present disclosure.
FIG. 3A is an explanatory drawing illustrating an action of a stabilizer fin in a case where a wind is received from a frontward direction.
FIG. 3B is an explanatory drawing illustrating an action of a stabilizer fin in a case where a wind is received from a rearward direction.
FIG. 4A is a side view of a vertical take-off and landing aircraft according to a second embodiment of the present disclosure.
FIG. 4B is a front view of the vertical take-off and landing aircraft according to the second embodiment of the present disclosure.
FIG. 5A is a side view of a vertical take-off and landing aircraft according to a third embodiment of the present disclosure.
FIG. 5B is a side view of a vertical take-off and landing aircraft according to a fourth embodiment of the present disclosure.

### Mode for carrying out the Invention

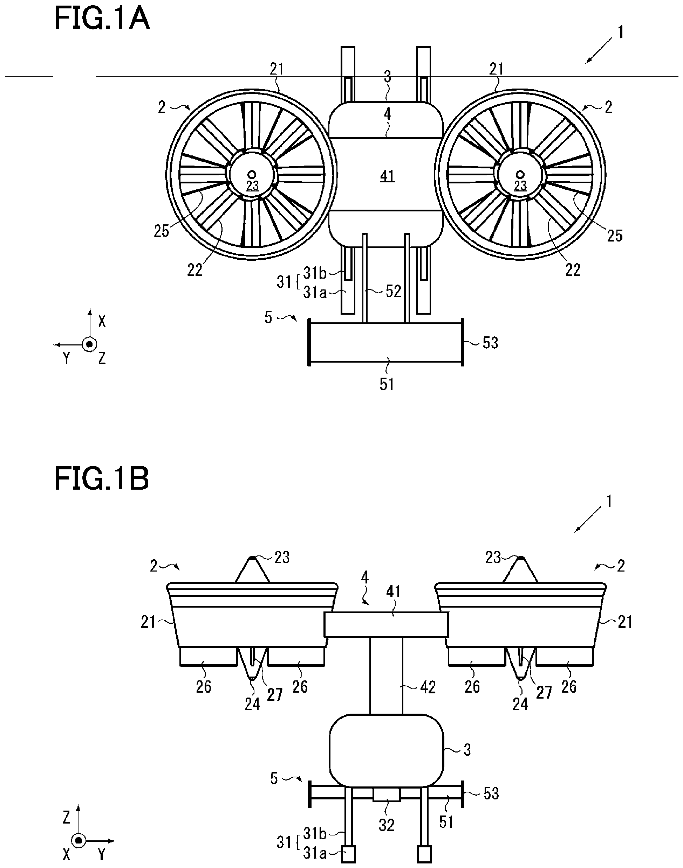

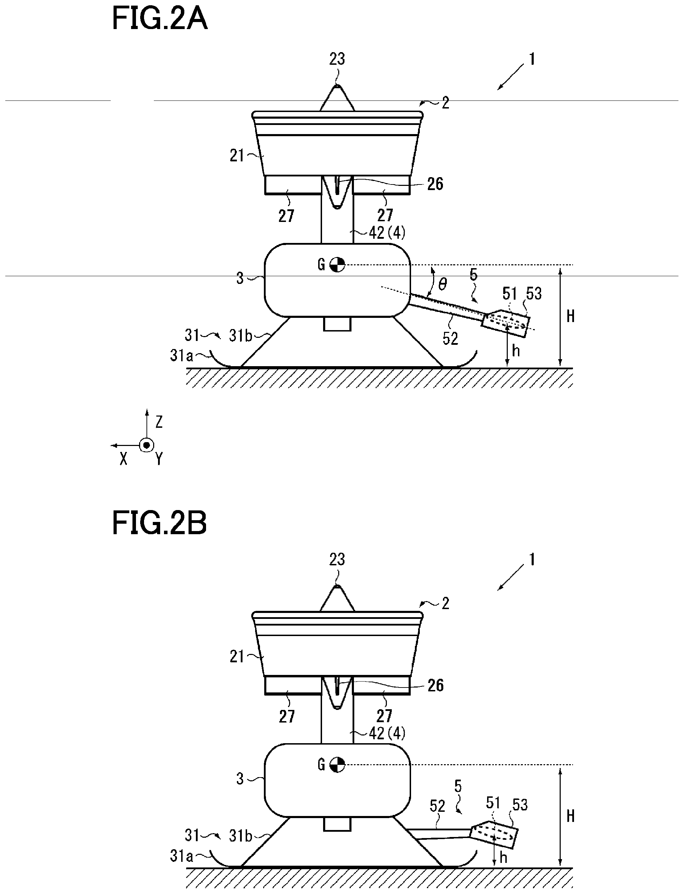

Embodiments of the present disclosure are described below using FIG. 1A to FIG. 5B. FIG. 1A and FIG. 1B are views illustrating a vertical take-off and landing aircraft according to a first embodiment of the present disclosure, in which FIG. 1A is a plan view and FIG. 1B is a front view. FIG. 2A and FIG. 2B are side views of a vertical take-off and landing aircraft of the present disclosure, in which FIG. 2A illustrates the first embodiment and FIG. 2B illustrates a modification.

As shown in FIG. 1A to FIG. 2A, the vertical take-off and landing aircraft 1 according to the first embodiment of the present disclosure includes a pair of ducted fans 2, a fuselage 3 that is disposed at a position lower than the ducted fans 2, a frame body 4 that connects the fuselage 3 and the ducted fans 2, and a stabilizer fin 5 that is disposed at a position at which the stabilizer fin 5 does not obstruct airflows from the ducted fans 2 and which is a position that is lower than an airframe center of gravity G and is rearward of the fuselage 3.

The ducted fans 2 are disposed, for example, on both the left side and right side of the airframe as shown in FIG. 1A and FIG. 1B, and are integrally connected by a first frame 41. Each of the ducted fans 2 includes, for example, an approximately cylindrical duct 21, a fan 22 which is rotatably disposed inside the duct 21, a nose cone 23 which is disposed on the upstream side of the fan 22, a tail cone 24 which is disposed on the downstream side of the fan 22, and stators 25 that connect the duct 21 and the tail cone 24. Note that the ducted fan 2 is also sometimes called a "duct fan".

The nose cone 23 has a function of smoothly guiding air that is sucked in by the fan 22 into the duct 21. The stators 25 have a function of straightening a flow of air that is guided into the duct 21. Further, a motive power transmission mechanism (not illustrated) that transmits motive power to the fan 22 may be disposed inside some of the stators 25. The tail cone 24 has a function of smoothly guiding air that is discharged from the duct 21.

Each of the ducted fans 2 may also have at its outlet portion control vanes 26 and 27 whose angles of attack are adjustable. The control vanes 26 and 27 are, for example, connected to a drive shaft (not shown) that is extended between the duct 21 and the tail cone 24 at the outlet portion (downstream side of the fan 22) of the ducted fans 2. A driving source (for example, an electric motor) of the control vanes 26 and 27 is disposed inside the tail cone 24 or the duct 21. The control vanes 26 and 27 are arranged, for example, in a substantially cross-shaped pattern and include a pair of control vanes 26 which are pivoted in a front-rear direction of the airframe and a pair of control vanes 27 pivoted in a left-right direction of the airframe.

By pivoting the control vanes 26 and 27 in an arbitrary direction to adjust the angles of attack, the direction of thrust generated by the ducted fans 2 can be adjusted and the travelling direction of the airframe can be controlled. The control vanes 26 and 27 may also be used for controlling the attitude of the airframe.

For example, a motive power source and a control device of the ducted fans 2 are mounted in the fuselage 3. The motive power source (not shown) is, for example, an engine that is driven by fuel. A fuel tank may also be mounted in the fuselage 3. Motive power generated by the engine that is housed in the fuselage 3 is transmitted to the ducted fans 2 by means of a motive power transmission mechanism (for example, a belt transmission mechanism, a gear transmission mechanism, a chain transmission mechanism, or a transmission mechanism that is a combination of these transmission mechanisms or the like) which is disposed inside the frame body 4, and the motive power rotates the fans 22. The motive power transmission mechanism may include a mechanism such as a deceleration mechanism or a reverse gear or the like.

By employing an engine as a motive power source in this manner, the ducted fans 2 of a large size can be driven for a long time period, and the size of a payload (load capacity) can be increased. However, the motive power source is not limited to an engine, and may be an electric motor which is disposed in each of the ducted fans 2. In this case, a battery (for example, a storage battery, a fuel cell, or a solar cell) that is capable of supplying electric power to the electric motors is mounted in the fuselage 3.

The control device (not shown) that is mounted in the fuselage 3 controls an output of the motive power source, a speed of rotation of the ducted fans 2, and the angles of attack of the control vanes 26 and 27 and the like. The control device may be formed to automatically pilot the vertical take-off and landing aircraft 1 based on a program that is input in advance, or may be formed to enable remote piloting of the vertical take-off and landing aircraft 1 by use of a remote controller or the like.

The fuselage 3 may include leg portions 31 that support the airframe when landing. Each leg portion 31 includes, for example, a landing portion 31a that contacts the ground when landing, and a support portion 31b that is connected to the fuselage 3 and supports the landing portion 31a. The landing portion 31a, for example, is a plate member that extends in a longitudinal direction (X-axis direction in the drawings) of the airframe, and a front end portion and a rear end portion thereof may be bent upwards. Further, a length and an area of the landing portion 31a is set so that the landing portion 31a can stably support the airframe when landing. The leg portion 31 is disposed at a position at which the leg portion 31 does not obstruct airflows generated by the ducted fans 2.

The structure of the leg portion 31 is not limited to the structure illustrated in the drawings. For example, the landing portion 31a may extend in a transverse direction (Y-axis direction in the drawings) of the airframe, or may curve or bend within the X-Y plane. Further, the landing portion 31a may be omitted from the leg portion 31, and the leg portion 31 may be constituted by only a rod member such as the support portion 31b.

The fuselage 3 may have a connector 32 that supports a cargo on the underside thereof. The cargo is, for example, photography equipment such as a camera, a survey instrument, or rescue materials. Note that, a configuration may be adopted so that the shape and arrangement of the leg portions 31 can be changed depending on the type and size of the cargo that is loaded.

The frame body 4 includes, for example, a first frame 41 that connects the left and right ducted fans 2, and a second frame 42 that connects the first frame 41 and the fuselage 3. Because the fuselage 3 has a certain volume, the fuselage 3 is preferably arranged at a position at which the fuselage 3 does not obstruct airflows that are generated by the ducted fans 2.

Therefore, the fuselage 3 is disposed at an intermediate section between the left and right ducted fans 2, that is, below the first frame 41. In other words, the width of the first frame 41 is set so that the fuselage 3 does not interfere with airflows from the ducted fans 2. Note that, the first frame 41 and the second frame 42 may be formed in a cylindrical or streamline shape so that wind resistance can be reduced when flying.

The stabilizer fin 5, for example, includes a fin portion 51 that is disposed rearward of the fuselage 3, a support portion 52 that supports the fin portion 51, and fairings 53 that are disposed at both ends of the fin portion 51. Although the vertical take-off and landing aircraft 1 can fly in both the forward and rearward directions (X-axis directions in the drawings), in order to realize a stable long-distance flight, for convenience, defining forward and rearward directions of the airframe is preferable from the viewpoint of propulsive efficiency and airframe design. In the present embodiment, the tip side of an arrow indicating the X-axis in the drawings is defined as "forward", and the proximal end side of the arrow is defined as "rearward".

The fin portion 51 is a member that receives wind and generates lift. As shown in FIG. 2A, for example, the fin portion 51 is disposed at a position that is lower than the airframe center of gravity and is rearward of the fuselage 3. For example, if the height from the ground to the airframe center of gravity G is taken as "H", a height h from the ground to the fin portion 51 satisfies the condition h<H. At such time, as shown in FIG. 1B, the fin portion 51 may have a portion that projects further downward than the fuselage 3. By the fin portion 51 being disposed at a position that is further downward than the fuselage 3 in this manner, the fin portion 51 can efficiently receive wind from the front or the rear without the wind being obstructed by the fuselage 3.

Furthermore, as shown in FIG. 2A, the fin portion 51 may be disposed in an inclined state so that the trailing edge thereof is lower than the leading edge in a state in which the vertical take-off and landing aircraft 1 has landed on the ground horizontally. An inclination angle θ of the fin portion 51 preferably satisfies the condition 0°≤θ≤30°. Specifically, the inclination angle θ is set to an angle such that, in a state in which the vertical take-off and landing aircraft 1 is flying in the forward direction at cruising speed, torque that attempts to rotate the airframe rearward that is caused by wind resistance arising at the ducts can be cancelled out.

Further, as shown in FIG. 1A, the fin portion 51 is disposed at a position at which the fin portion 51 does not obstruct airflows generated by the ducted fans 2, that is, at a position that avoids the region directly underneath the ducted fans 2. By disposing the fin portion 51 at such a position, interference with airflows that are discharged from the ducted fans 2 can be avoided, and a decrease in the propulsive efficiency is not caused.

Further, as shown in FIG. 2A, in order to effectively generate lift, the fin portion 51 may have a streamlined cross-sectional shape. Note that, the shape of the fin portion 51 and the area of a portion that receives wind are arbitrarily set in accordance with the size and weight of the airframe and the like.

The support portion 52 is a member that supports the fin portion 51. The support portion 52 may be connected to the rear of the fuselage 3 as shown in FIG. 2A, or may be connected to the support portion 31b of the leg portion 31 as shown in FIG. 2B. Although in the first embodiment illustrated in FIG. 2A and in a modification illustrated in FIG. 2B, the fin portion 51 is supported by two support portions 52, the number and shape of the support portion 52 can be arbitrarily set.

The fairing 53 is a member that straightens wind that flows through the area around the fin portion 51. By providing such a fairing 53, wind that flows past the circumference of both end portions of the fin portion 51 can be turned toward the downstream side in the X direction without being allowed to flow in the Y-direction, and thus lift produced by the fin portion 51 can be stabilized. Note that the fairing 53 can be omitted as necessary.

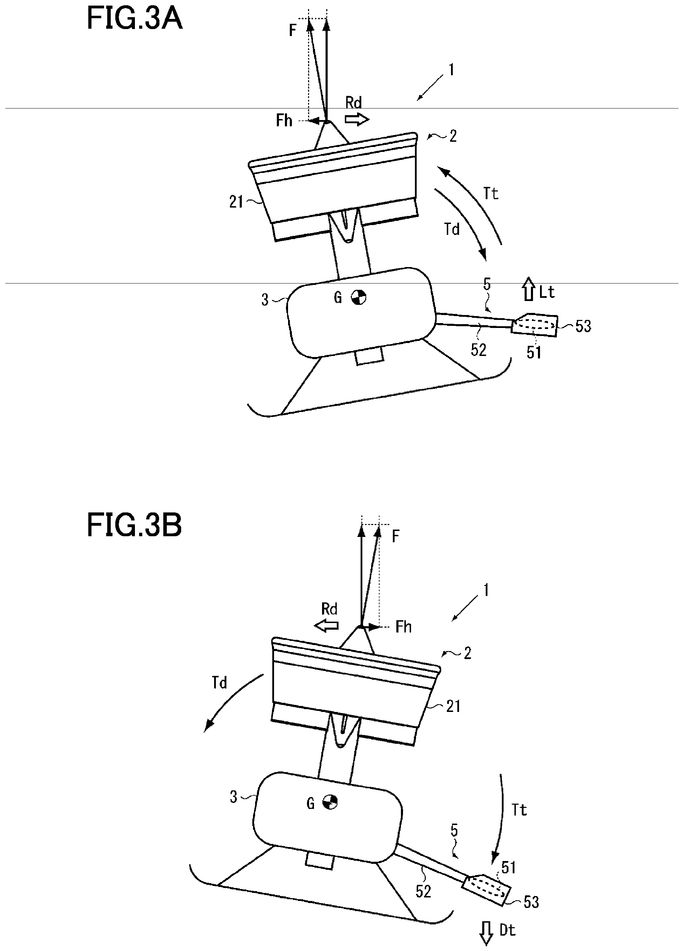

Next, the action of the stabilizer fin 5 will be described while referring to FIG. 3A and FIG. 3B. FIG. 3A and FIG. 3B are explanatory drawings that illustrate actions of the stabilizer fin, in which FIG. 3A illustrates a case where wind is received from the front, and FIG. 3B illustrates a case where wind is received from the rear.

As shown in FIG. 3A, in a case where the airframe receives wind from the front direction while the vertical take-off and landing aircraft 1 is hovering, the duct 21 receives a drag Rd in the rearward direction. The drag Rd produces a rearward-tilting torque Td that tilts the airframe rearward. On the other hand, when the airframe receives wind from the front direction while the vertical take-off and landing aircraft 1 is hovering, a lift Lt in the upward direction acts on the stabilizer fin 5. The lift Lt produces a forward-tilting torque Tt that tilts the airframe frontward. At this time, the attitude of the airframe can be maintained by making the rearward-tilting torque Td equal to the forward-tilting torque Tt.

When the stabilizer fin 5 is formed so that the rearward-tilting torque Td is equal to the forward-tilting torque Tt in this manner, an action whereby the attitude of the airframe is returned to its original attitude after being tilted rearward is repeated, and there is a possibility that the airframe will swing. Therefore, when the airframe is in a situation in which the airframe is susceptible to wind from the front direction, the airframe may be proactively tilted frontward by configuring the stabilizer fin 5 so that the forward-tilting torque Tt is greater than the rearward-tilting torque Td.

By tilting the airframe frontward in advance in this manner, a component Fh in the horizontally forward direction of a thrust F of the ducted fan 2 can be generated. Therefore, the drag Rd of the duct 21 can be cancelled out by the horizontal direction component Fh of the thrust, and thus generation of the rearward-tilting torque Td can be avoided in advance and swinging of the airframe can be suppressed.

As shown in FIG. 3B, in a case where the airframe receives wind from the rear direction while the vertical take-off and landing aircraft 1 is hovering, the duct 21 receives a drag Rd in the forward direction. The drag Rd produces a forward-tilting torque Td that tilts the airframe frontward. On the other hand, when the airframe receives wind from the rear direction while the vertical take-off and landing aircraft 1 is hovering, a lift (down force) Dt in the downward direction acts on the stabilizer fin 5. The down force Dt produces a rearward-tilting torque Tt that tilts the airframe rearward. At this time, the attitude of the airframe can be maintained by making the forward-tilting torque Td equal to the rearward-tilting torque Tt.

When the stabilizer fin 5 is formed so that the forward-tilting torque Td is equal to the rearward-tilting torque Tt in this manner, an action whereby the attitude of the airframe is returned to its original attitude after being tilted frontward is repeated, and there is a possibility that the airframe will swing. Therefore, when the airframe is in a situation in which the airframe is susceptible to wind from the rear direction, the airframe may be proactively tilted rearward by configuring the stabilizer fin 5 so that the rearward-tilting torque Tt is greater than the forward-tilting torque Td.

By tilting the airframe rearward in advance in this manner, a component Fh in the horizontally rearward direction of the thrust F of the ducted fan 2 can be generated. Therefore, the drag Rd of the duct 21 can be cancelled out by the horizontal direction component Fh of the thrust, and thus generation of the rearward-tilting torque Td can be avoided in advance and swinging of the airframe can be suppressed.

According to the vertical take-off and landing aircraft 1 of the first embodiment that is described above, by arranging the stabilizer fin 5 at a position at which the stabilizer fin 5 does not obstruct airflows from the ducted fans 2 that is a position which is lower than the airframe center of gravity G and is rearward of the fuselage 3, even in a case where the ducts 21 of the ducted fans 2 receive wind resistance, torque caused by drag can be cancelled out and the attitude of the airframe can be easily maintained.

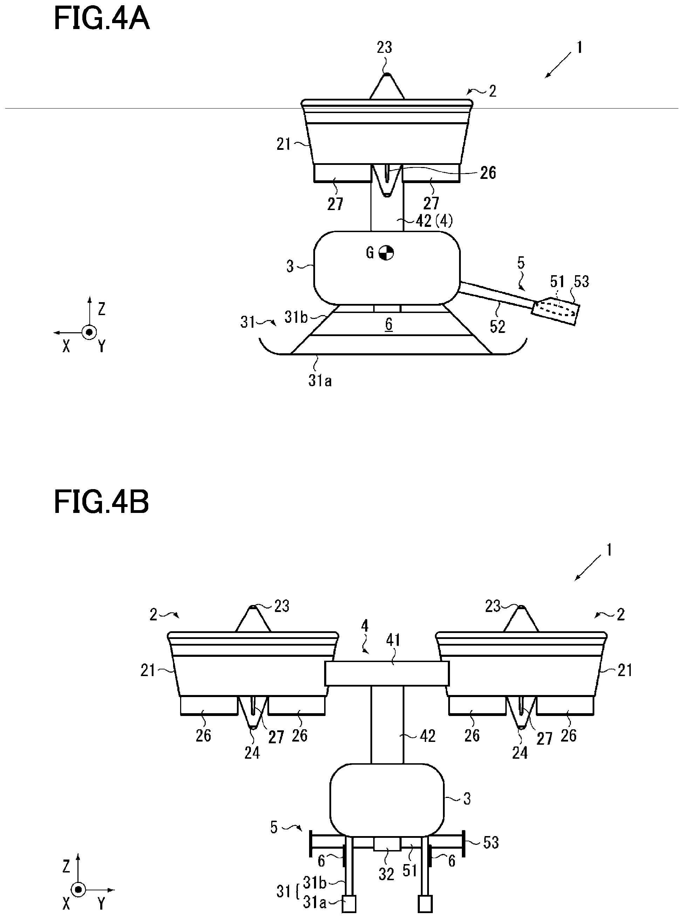

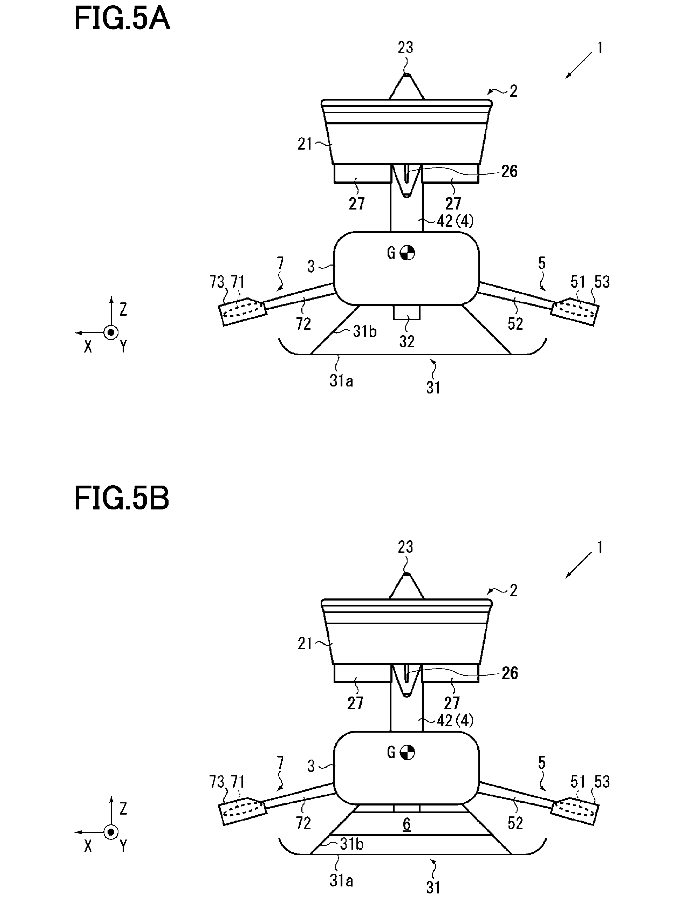

Next, vertical take-off and landing aircrafts 1 according to other embodiments of the present disclosure will be described referring to FIG. 4A to FIG. 5B. FIG. 4A to FIG. 4B are views that illustrate a vertical take-off and landing aircraft according to a second embodiment of the present disclosure, of which FIG. 4A is a side view and FIG. 4B is a front view. FIG. 5A to FIG. 5B are side views illustrating vertical take-off and landing aircrafts according to other embodiments of the present disclosure, of which FIG. 5A illustrates a third embodiment and FIG. 5B illustrates a fourth embodiment. Note that, constituent members which are common with constituent members of the vertical take-off and landing aircraft 1 of the above described first embodiment are denoted by the same reference numerals, and a duplicate description of such members is omitted hereunder.

In the vertical take-off and landing aircraft 1 according to the second embodiment that is illustrated in FIG. 4A and FIG. 4B, a roll stabilizer fin 6 that suppresses a rolling motion of the airframe is disposed in the leg portion 31. In general, motion about the X-axis (longitudinal direction axis of the airframe) is referred to as a rolling motion (rolling), motion about the Y-axis (transverse direction axis of the airframe) is referred to as a pitch motion (pitching), and motion about the Z-axis (vertical direction axis of the airframe) is referred to as a yaw motion (yawing). The roll stabilizer fin 6 is a stabilizer fin that suppresses a rolling motion that arises at the airframe.

Specifically, as shown in FIG. 4A and FIG. 4B, the roll stabilizer fin 6 is constituted by a flat plate which is arranged at a position that is lower than the airframe center of gravity G and which is expanded on the X-Z plane, and which is disposed at a side face of the support portion 31b that partly constitutes the leg portion 31. Note that, the roll stabilizer fin 6 is not limited to being disposed in parallel with the X-Z plane, and may be disposed in an inclined state relative to the X-Z plane.

According to the second embodiment, even in a case where the duct 21 receives resistance caused by wind in the transverse direction (Y-direction in the drawings) and torque arises which attempts to rotate the airframe, torque in the opposite direction can be generated by the roll stabilizer fin 6 which receives wind at a position that is lower than the airframe center of gravity G, and a rolling motion of the airframe can be suppressed.

The vertical take-off and landing aircraft 1 according to the third embodiment that is illustrated in FIG. 5A includes a second stabilizer fin 7 which is located at a position such that the second stabilizer fin 7 does not obstruct airflows from the ducted fans 2, which is a position that is lower than the airframe center of gravity G and is to the front of the fuselage 3. Similarly to the aforementioned stabilizer fin 5, the second stabilizer fin 7 includes a fin portion 71, a support portion 72 and a fairing 73. Because the vertical take-off and landing aircraft 1 is capable of flying in both the forward and rearward directions, in a case where the forward and rearward directions of the airframe are not defined, which direction among the forward direction and rearward direction the vertical take-off and landing aircraft 1 is to fly in is not specified in advance. Therefore, in the present embodiment, the second stabilizer fin 7 is provided in addition to the stabilizer fin 5 so as to be able to adapt to flying in both the forward direction and the rearward direction.

According to the third embodiment, when the airframe receives wind from the frontward direction while the vertical take-off and landing aircraft 1 is hovering, by generating lift by means of the stabilizer fin 5 and generating a down force by means of the second stabilizer fin 7, a forward-tilting torque can be generated. Further, when the airframe receives wind from the rearward direction while the vertical take-off and landing aircraft 1 is hovering, by generating a down force by means of the stabilizer fin 5 and generating lift by means of the second stabilizer fin 7, a rearward-tilting torque can be generated.

Therefore, according to the vertical take-off and landing aircraft 1 of the third embodiment, not only can the attitude of the airframe be easily maintained, but the size of the fin portion 51 of the stabilizer fin 5 and the fin portion 71 of the second stabilizer fin 7 can be made smaller.

The vertical take-off and landing aircraft 1 according to the fourth embodiment that is illustrated in FIG. 5B is an aircraft in which the roll stabilizer fin 6 illustrated in the second embodiment is provided in the vertical take-off and landing aircraft 1 according to the third embodiment that is described above. According to the fourth embodiment, it is possible to deal with not only wind from the forward and rearward directions but also wind from a transverse direction, and thus the attitude of the airframe can be easily maintained.

Although the vertical take-off and landing aircraft 1 according to each of the first embodiment to fourth embodiment that are described above has been described as an unmanned aircraft in which there is no pilot on board, the vertical take-off and landing aircraft 1 may be a manned aircraft in which a seat for a pilot to sit on is provided in the fuselage 3 or the frame body 4.

The present disclosure is not limited to the above described embodiments, and naturally various modifications are possible without departing from the spirit and scope of the present disclosure.

### Explanation of Reference Signs

- 1: Vertical take-off and landing aircraft
- 2: Ducted fan
- 3: Fuselage
- 4: Frame body
- 5: Stabilizer fin
- 6: Roll stabilizer fin
- 7: Second stabilizer fin
- 21: Duct
- 22: Fan
- 23: Nose cone
- 24: Tail cone
- 25: Stator
- 26, 27: Control fin
- 31: Leg portion
- 31a: Landing portion
- 31b: Support portion
- 32: Connector
- 41: First frame
- 42: Second frame
- 51, 71: Fin portion
- 52, 72: Support portion
- 53, 73: Fairing

## Claims

1. A vertical take-off and landing aircraft, comprising:
a plurality of ducted fans;
a fuselage that is disposed at a lower position than the ducted fans;
a frame body that connects the fuselage and the ducted fans; and
a stabilizer fin that is disposed at a position at which the stabilizer fin does not obstruct airflows from the ducted fans, that is a position which is lower than an airframe center of gravity and is rearward of the fuselage.

2. The vertical take-off and landing aircraft according to claim 1, wherein the stabilizer fin has a portion that projects further downward than the fuselage.

3. The vertical take-off and landing aircraft according to claim 1, wherein, in a state in which the vertical take-off and landing aircraft has landed on the ground horizontally, the stabilizer fin is disposed in an inclined state such that a trailing edge of the stabilizer fin is positioned further downward than a leading edge of the stabilizer fin.

4. The vertical take-off and landing aircraft according to claim 1, wherein:
the fuselage comprises a leg portion that supports the airframe when landing, and
the stabilizer fin is connected to the leg portion.

5. The vertical take-off and landing aircraft according to claim 1, wherein:
the fuselage comprises a leg portion that supports the airframe when landing, and
the leg portion comprises a roll stabilizer fin that suppresses a rolling motion of the airframe.

6. The vertical take-off and landing aircraft according to claim 1, comprising:
a second stabilizer fin that is disposed at a position at which the second stabilizer fin does not obstruct airflows from the ducted fans, that is a position which is lower than the airframe center of gravity and is frontward of the fuselage.
